# EUROPEAN PATENT SPECIFICATION

(11) **EP 2 096 137 B1**
(45) Date of publication and mention of the grant of the patent: **14.09.2011**
(21) Application number: 06842881.2
(22) Date of filing: 19.12.2006
(51) Int. Cl.: C08L 23/00, C08K 3/22, C08K 5/20, C08K 13/02

(54) **NOVEL POLYOLEFIN RESIN COMPOSITION AND MOLDED RESIN OBTAINED THEREFROM**
NEUE POLYOLEFINHARZZUSAMMENSETZUNG UND DARAUS ERHALTENES GEFORMTES HARZ
NOUVELLE COMPOSITION DE RÉSINE DE POLYOLÉFINE ET RÉSINE MOULÉE OBTENUE À PARTIR DE CELLE-CI

(43) Date of publication of application: 02.09.2009
(73) Proprietor: New Japan Chemical Co., Ltd., Kyoto 612-8224 (JP)
(72) Inventor: NIGA, Sukehiro, Kyoto-shi Kyoto 612-8224 (JP); ISHIKAWA, Masahide, Kyoto-shi Kyoto 612-8224 (JP)
(74) Representative: Vossius & Partner
(86) International application number: PCT/JP2006/325277
(87) International publication number: WO 2008/075410

(56) References cited:
- EP-A1- 0 861 877
- JP-A- 7 242 610
- JP-A- 07 242 610
- JP-A- 2005 528 498

## Description

### TECHNICAL FIELD

The present invention relates to a novel polyolefin-based resin composition and a method for producing the same; a polyolefin-based resin molded article obtained by molding the polyolefin-based resin composition; a method for improving the transparency of a polyolefin-based resin; a method for improving the rigidity of a polyolefin-based resin; and a nucleating agent composition for a polyolefin-based resin.

### BACKGROUND ART

Polyolefin-based resins are used in various fields as materials for film molding, sheet molding, blow molding, injection molding, etc., owing to their excellent moldability, mechanical and electrical properties, etc. With such excellent physical properties, however, polyolefin-based resins have the problems of being generally low in transparency, crystallinity, and rigidity. In order to overcome such problems, techniques using amide-based compounds and the like as nucleating-agent compositions have been proposed (Patent Documents 1 to 4).

Polyolefin-based resin compositions containing such amide-based compounds have high crystallization rates. Therefore, injection molding of these compositions contributes to shortened molding cycle time. The molded articles thus obtained also have improved transparency and mechanical properties (e.g., rigidity).

In order to further improve mechanical properties, it is known to add a filler such as talc or the like to a polyolefin-based resin composition containing an amide-based compound (Patent Documents 5 and 6). The amount of such filler is generally as large as 5 to 30 weight % based on the polyolefin-based resin.

In recent years, end users are making demands on polyolefin-based resin molded articles, such as increased diversity and functionality. Thus, a desire exists for the development of a polyolefin-based resin composition capable of yielding a molded article having superior transparency and mechanical strength (rigidity, in particular), etc.
Patent Document 1: Japanese Unexamined Patent Publication No. 1994-192496
Patent Document 2: Japanese Unexamined Patent Publication No. 1995-242610
Patent Document 3: Japanese Unexamined Patent Publication No. 1995-278374
Patent Document 4: Japanese Unexamined Patent Publication No.1996-100088
Patent Document 5: International Publication No. 05/37770 pamphlet
Patent Document 6: International Publication No. 05/63874 pamphlet

### DISCLOSURE OF THE INVENTION

### PROBLEMS TO BE SOLVED BY THE INVENTION

An object of the present invention is to provide a polyolefin-based resin composition capable of yielding a molded article having excellent crystallinity, rigidity, transparency and the like, and a method for producing the same.

Another object of the present invention is to provide a polyolefin-based resin molded article having excellent crystallinity, rigidity, transparency and the like obtained by molding the polyolefin-based resin composition; a method for improving the transparency of a polyolefin-based resin; a method for improving the rigidity of a polyolefin-based resin; and a nucleating-agent composition for a polyolefin-based resin.

### MEANS FOR SOLVING THE PROBLEM

In view of the aforementioned state of the art, the present inventors conducted extensive research for solving these problems. As a result, it was found that a polyolefin-based resin, when blended with specific amide-based compound(s) and specific inorganic compound(s), exhibits dramatically improved crystallinity, rigidity and transparency, and additionally displays improved heat resistance. The present invention was accomplished by carrying out further research based on this finding. The present invention provides the inventions described in the following items.
(Item 1) A polyolefin-based resin composition comprising:
   a polyolefin-based resin, and per 100 weight parts of the polyolefin-based resin,
      (A): 0.01 to 1 weight part of at least one amide-based compound represented by general formula (1): 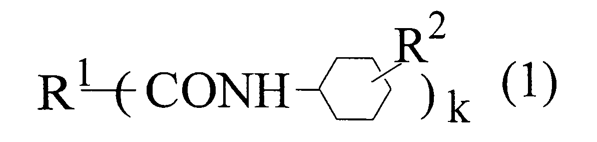 wherein
         k is an integer of 3 or 4;
         R¹ is a residue obtained by removing all of the carboxyl groups from 1,2,3-propanetricarboxylic acid, 1,2,3,4-butanetetracarboxylic acid or 1,3,5-benzenetricarboxylic acid; and
         the three or four R²s are the same or different, and each independently represents a hydrogen atom or a C₁₋₁₀ linear or branched alkyl group; and
      (B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.
(Item 2) A polyolefin-based resin composition according to item 1, wherein component (A) and component (B) are used in a weight ratio of component (A) : component (B) = 1 : 0.01-10.
(Item 3) A polyolefin-based resin composition according to item 1, wherein component (A) and component (B) are used in a weight ratio of component (A): component (B) = 1 : 0.1 - 3.
(Item 4) A polyolefin-based resin molded article obtainable by molding a polyolefin-based resin composition according to any one of items 1 to 3.
(Item 5) A polyolefin-based resin molded article according to item 4, wherein the molding comprises the step of dissolving component (A) completely in a melt of the polyolefin-based resin.
(Item 6) A method for improving the transparency of a polyolefin-based resin, comprising adding to 100 weight parts of the polyolefin-based resin:
   (A): 0.01 to 1 weight part of at least one amide-based compound represented by general formula (1): 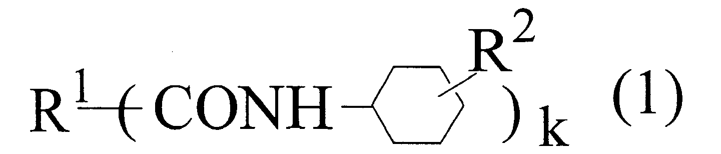 wherein
      k is an integer of 3 or 4,
      R¹ is a residue obtained by removing all of the carboxyl groups from 1,2,3-propanetricarboxylic acid, 1,2,3,4-butanetetracarboxylic acid or 1,3,5-benzenetricarboxylic acid; and
      the three or four R²s are the same or different, and each independently represents a hydrogen atom or a C₁₋₁₀ linear or branched alkyl group; and
   (B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.
(Item 7) A method for improving the rigidity of a polyolefin-based resin, comprising adding to 100 weight parts of the polyolefin-based resin:
   (A): 0.01 to 1 weight part of at least one amide-based compound represented by general formula (1): 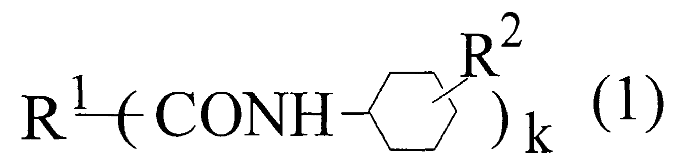 wherein
      k is an integer of 3 or 4,
      R¹ is a residue obtained by removing all of the carboxyl groups from 1,2,3-propanetricarboxylic acid, 1,2,3,4-butanetetracarboxylic acid or 1,3,5-benzenetricarboxylic acid; and
      the three or four R²s are the same or different, and each independently represents a hydrogen atom or a C₁₋₁₀ linear or branched alkyl group, and
   (B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.
(Item 8) A method for producing a polyolefin-based resin composition comprising
   a polyolefin-based resin, and per 100 weight parts of the polyolefin-based resin,
   (A): 0.01 to 1 weight part of at least one amide-based compound represented by general formula (1): 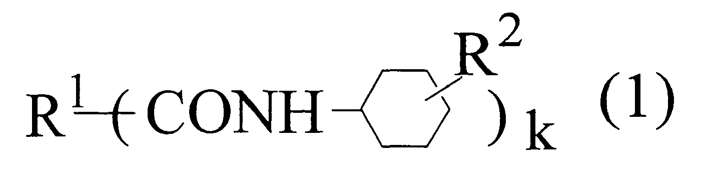 wherein
      k is an integer of 3 or 4
      R¹ is a residue obtained by removing all of the carboxyl groups from 1,2,3-propanetricarboxylic acid, 1,2,3,4-butanetetracarboxylic acid or 1,3,5-benzenetricarboxylic acid; and
      the three or four R²s are the same or different, and each independently represents a hydrogen atom or a C₁₋₁₀ linear or branched alkyl group, and
   (B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate, and calcium oxide,
      the method comprising dissolving component (A) completely in a melt of the polyolefin-based resin.
(Item 9) A nucleating agent composition (having a uniform composition) for polyolefin-based resins, comprising:
   (A): at least one amide-based compound represented by general formula (1): 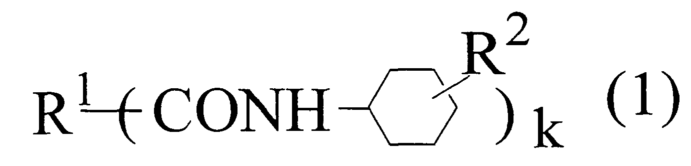 wherein
      k is an integer of 3 or 4,
      R¹ is a residue obtained by removing all of the carboxyl groups from 1,2,3-propanetricarboxylic acid, 1,2,3,4-butanetetracarboxylic acid or 1,3,5-benzenetricarboxylic acid; and
      the three or four R²s are the same or different, and each independently represents a hydrogen atom or a C₁₋₁₀ linear or branched alkyl group, and
   (B): at least one inorganic compound selected from the group consisting of hydrotalcite, calcined hydrotalcite, talc, alkali aluminum double hydroxides, magnesium hydroxide, magnesium oxide, calcium carbonate and calcium oxide.
(Item 10) A nucleating agent composition for polyolefin-based resins according to item 9, wherein component (A) and component (B) are used in a weight ratio of component (A): component (B)= 1: 0.01 - 10.

### EFFECTS OF THE INVENTION

In accordance with the present invention, there is provided a polyolefin-based resin composition comprising a polyolefin-based resin, component (A) and component (B), and molding such polyolefin-based resin composition gives a polyolefin-based resin molded article exhibiting excellent crystallinity, rigidity, transparency and heat resistance.

Moreover, according to the present invention, there is provided a nucleating agent composition comprising component (A) and component (B). The nucleating agent composition of the present invention comprising component (A) and component (B) is in the form of a powder with good flowability, and is excellent in transferability through piping, and improves operation efficiency.

### BEST MODE FOR CARRYING OUT THE INVENTION

### Component (A): amide-based compound

Component (A) in accordance with the invention is at least one of amide-based compounds represented by general formula (1) shown above. Specific examples of such amide-based compounds include the following compounds:
<(A1): propanetricarboxylic acid triamides>
   1,2,3-propanetricarboxylic acid tricyclohexylamide;
   1,2,3-propanetricarboxylic acid tri(2-methylcyclohexylamide);
   1,2,3-propanetricarboxylic acid tri(3-methylcyclohexylamide);
   1,2,3-propanetricarboxylic acid tri(4-methylcyclohexylamide);
   1,2,3-propanetricarboxylic acid tri(2-ethylcyclohexylamide);
   1,2,3-propanetricarboxylic acid tri(3-ethylcyclohexylamide),
   1,2,3-propanetricarboxylic acid tri(4-ethylcyclohexylamide);
   1,2,3-propanetricarboxylic acid tri(2-n-propylcyclohexylamide);
   1,2,3-propanetricarboxylic acid tri(3-n-propylcyclohexylamide);
   1,2,3-propanetricarboxylic acid tri(4-n-propylcyclohexylamide);
   1,2,3-propanetricarboxylic acid tri(2-isopropylcyclohexylamide);
   1,2,3-propanetricarboxylic acid tri(3-isopropylcyclohexylamide);
   1,2,3-propanetricarboxylic acid tri(4-isopropylcyclohexylamide);
   1,2,3-propanetricarboxylic acid tri(2-n-butylcyclohexylamide);
   1,2,3-propanetricarboxylic acid tri(3-n-butylcyclohexylamide);
   1,2,3-propanetricarboxylic acid tri(4-n-butylcyclohexylamide);
   1,2,3-propanetricarboxylic acid tri(2-isobutylcyclohexylamide);
   1,2,3-propanetricarboxylic acid tri(3-isobutylcyclohexylamide);
   1,2,3-propanetricarboxylic acid tri(4-isobutylcyclohexylamide);
   1,2,3-propanetricarboxylic acid tri(2-sec-butylcyclohexylamide);
   1,2,3-propanetricarboxylic acid tri(3-sec-butylcyclohexylamide);
   1,2,3-propanetricarboxylic acid tri(4-sec-butylcyclohexylamide) ;
   1,2,3-propanetricarboxylic acid tri(2-tert-butylcyclohexylaide) ;
   1,2,3-propanetricarboxylic acid tri(3-tert-butylcyclohexylamide) ;
   1,2,3-propanetricarboxylic acid tri(4-tert-butylcyclohexylamide) ;
   1,2,3-propanetricarboxylic acid tri(4-n-pentylcyclohexylamide) ;
   1,2,3-propanetricarboxylic acid tri(4-n-hexylcyclohexylamide);
   1,2,3-propanetricarboxylic acid tri(4-n-heptylcyclohexylamide);
   1,2,3-propanetricarboxylic acid tri(4-n-octylcyclohexylamide);
   1,2,3-propanetricarboxylic acid tri[4-(2-ethylhexyl)cyclohexylamide] ;
   1,2,3-propanetricarboxylic acid tri(4-n-nonylcyclohexylamide);
   1,2,3-propanetricarboxylic acid tri(4-n-decylcyclohexylamide);
   1,2,3-propanetricarboxylic acid tri(di-2-methylcyclohexyl-monocyclohexyl)amide;
   1,2,3-propanetricarboxylic acid tri(dicyclohexyl-2-methylcyclohexyl)amide;
<(A2): butanetetracarboxylic acid tetraamides >
   1,2,3,4-butanetetracarboxylic acid tetracyclohexylamide;
   1,2,3,4-butanetetracarboxylic acid tetra(2-methylcyclohexylamide);
   1,2,3,4-butanetetracarboxylic acid tetra(3-methylcyclohexylamide);
   1,2,3,4-butanetetracarboxylic acid tetra(4-methylcyclohexylamide);
   1,2,3,4-butanetetracarboxylic acid tetra(2-ethylcyclohexylamide);
   1,2,3,4-butanetetracarboxylic acid tetra(3-ethylcyclohexylamide);
   1,2,3,4-butanetetracarboxylic acid tetra(4-ethylcyclohexylamide);
   1,2,3,4-butanetetracarboxylic acid te tra (2-n-propylcyclohexylamide);
   1,2,3,4-butanetetracarboxylic acid tetra(3-n-propylcyclohexylamide);
   1,2,3,4-butanetetracarboxylic acid tetra(4-n-propylcyclohexylamide);
   1,2,3,4-butanetetracarboxylic acid tetra(2-isopropylcyclohexylamide);
   1,2,3,4-butanetetracarboxylic acid tetra(3-isopropylcyclohexylamide);
   1,2,3,4-butanetetracarboxylic acid tetra(4-isopropylcyclohexylamide);
   1,2,3,4-butanetetracarboxylic acid tetra(2-n-butylcyclohexylamide);
   1,2,3,4-butanetetracarboxylic acid tetra(3-n-butylcyclohexylamide);
   1,2,3,4-butanetetracarboxylic acid tetra(4-n-butylcyclohexylamide) ;
   1,2,3,4-butanetetracarboxylic acid tetra(2-isobutylcyclohexylamide);
   1,2,3,4-butanetetracarboxylic acid tetra(3-isobutylcyclohexylamide);
   1,2,3,4-butanetetracarboxylic acid tetra(4-isobutylcyclohexylamide);
   1,2,3,4-butanetetracarboxylic acid tetra(2-sec-butylcyclohexylamide);
   1,2,3,4-butanetetracarboxylic acid tetra(3-sec-butylcyclohexylamide);
   1,2,3,4-butanetetracarboxylic acid tetra(4-sec-butylcyclohexylamide);
   1,2,3,4-butanetetracarboxylic acid tetra(2-tert-butylcyclohexylamide);
   1,2,3,4-butanetetracarboxylic acid tetra(3-tert-butylcyclohexylamide);
   1,2,3,4-butanetetracarboxylic acid tetra(4-tert-butylcyclohexylamide);
   1,2,3,4-butanetetracarboxylic acid tetra(4-n-pentylcyclohexylamide);
   1,2,3,4-butanetetracarboxylic acid tetra(4-n-hexylcyclohexylamide);
   1,2,3,4-butanetetracarboxylic acid tetra(4-n-heptylcyclohexylamide);
   1,2,3,4-butanetetracarboxylic acid tetra(4-n-octylcyclohexylamide);
   1,2,3,4-butanetetracarboxylic acid tetra[4-(2-ethylhexyl)cyclohexylamide];
   1,2,3,4-butanetetracarboxylic acid tetra(4-n-nonylcyclohexylamide);
   1,2,3,4-butanetetracarboxylic acid tetra(4-n-decylcyclohexylamide);
   1,2,3,4-butanetetracarboxylic acid tetra(dicyclohexyl-di-2-methylcyclohexyl)amide;
<(A3): benzenetricarboxylic acid triamides >
   1,3,5-benzenetricarboxylic acid tricyclohexylamide;
   1,3,5-benzenetricarboxylic acid tri(2-methylcyclohexylamide);
   1,3,5-benzenetricarboxylic acid tri(3-methylcyclohexylamide);
   1,3,5-benzenetricarboxylic acid tri(4-methylcyclohexylamide);
   1,3,5-benzenetricarboxylic acid tri(2-ethylcyclohexylamide);
   1,3,5-benzenetricarboxylic acid tri(3-ethylcyclohexylamide);
   1,3,5-benzenetricarboxylic acid tri(4-ethylcyclohexylamide);
   1,3,5-benzenetricarboxylic acid tri(2-n-propylcyclohexylamide);
   1,3,5-benzenetricarboxylic acid tri(3-n-propylcyclohexylamide);
   1,3,5-benzenetricarboxylic acid tri(4-n-propylcyclohexylamide);
   1,3,5-benzenetricarboxylic acid tri(2-isopropylcyclohexylamide);
   1,3,5-benzenetricarboxylic acid tri(3-isopropylcyclohexylamide);
   1,3,5-benzenetricarboxylic acid tri(4-isopropylcyclohexylamide);
   1,3,5-benzenetricarboxylic acid tri(2-n-butylcyclohexylamide);
   1,3,5-benzenetricarboxylic acid tri(3-n-butylcyclohexylamide);
   1,3,5-benzenetricarboxylic acid tri(4-n-butylcyclohexylamide);
   1,3,5-benzenetricarboxylic acid tri(2-isobutylcyclohexylamide);
   1,3,5-benzenetricarboxylic acid tri(3-iso-butylcyclohexylamide);
   1,3,5-benzenetricarboxylic acid tri(4-isobutylcyclohexylamide);
   1,3,5-benzenetricarboxylic acid tri(2-sec-butylcyclohexylamide);
   1,3,5-benzenetricarboxylic acid tri(3-sec-butylcyclohexylamide);
   1,3,5-benzenetricarboxylic acid tri(4-sec-butylcyclohexylamide);
   1,3,5-benzenetricarboxylic acid tri(2-tert-butylcyclohexylamide);
   1,3,5-benzenetricarboxylic acid tri(3-tert-butylcyclohexylamide);
   1,3,5-benzenetricarboxylic acid tri(4-tert-butylcyclohexylamide);
   1,3,5-benzenetricarboxylic acid tri(4-n-pentylcyclohexylamide);
   1,3,5-benzenetricarboxylic acid tri(4-n-hexylcyclohexylamide);
   1,3,5-benzenetricarboxylic acid tri(4-n-heptylcyclohexylamide);
   1,3,5-benzenetricarboxylic acid tri(4-n-octylcyclohexylamide);
   1,3,5-benzenetricarboxylic acid tri[4-(2-ethylhexyl)cyclohexylamide];
   1,3,5-benzenetricarboxylic acid tri(4-n-nonylcyclohexylamide);
   1,3,5-benzenetricarboxylic acid tri(4-n-decylcyclohexylamide);
   1,3,5-benzenetricarboxylic acid tri(di-2-methylcyclohexyl-monocyclohexyl)amide;
   1,3,5-benzenetricarboxylic acid tri(dicyclohexyl-2-methylcyclohexyl) amide; etc.

Of the aforementioned amide-based compounds, those represented by the formula (1) in which the three or four R² groups each represent a hydrogen atom or a C₁₋₄ linear or branched alkyl group are preferable in view of their good nucleating effect.

Specific examples of such compounds include the following compounds:
<(AA1): propanetricarboxylic acid triamides>
   1,2,3-propanetricarboxylic acid tricyclohexylamide;
   1,2,3-propanetricarboxylic acid tri(2-methylcyclohexylamide);
   1,2,3-propanetricarboxylic acid tri(3-methylcyclohexylamide);
   1,2,3-propanetricarboxylic acid tri(4-methylcyclohexylamide);
   1,2,3-propanetricarboxylic acid tri(2-ethylcyclohexylamide);
   1,2,3-propanetricarboxylic acid tri(3-ethylcyclohexylamide);
   1,2,3-propanetricarboxylic acid tri(4-ethylcyclohexylamide);
   1,2,3-propanetricarboxylic acid tri(2-n-propylcyclohexylamide);
   1,2,3-propanetricarboxylic acid tri(3-n-propylcyclohexylamide);
   1,2,3-propanetricarboxylic acid tri(4-n-propylcyclohexylamide);
   1,2,3-propanetricarboxylic acid tri(2-isopropylcyclohexylamide);
   1,2,3-propanetricarboxylic acid tri(3-isopropylcyclohexylamide);
   1,2,3-propanetricarboxylic acid tri(4-isopropylcyclohexylamide);
   1,2,3-propanetricarboxylic acid tri(2-n-butylcyclohexylamide);
   1,2,3-propanetricarboxylic acid tri(3-n-butylcyclohexylamide);
   1,2,3-propanetricarboxylic acid tri(4-n-butylcyclohexylamide);
   1,2,3-propanetricarboxylic acid tri(2-isobutylcyclohexylamide);
   1,2,3-propanetricarboxylic acid tri(3-isobutylcyclohexylamide);
   1,2,3-propanetricarboxylic acid tri(4-isobutylcyclohexylamide);
   1,2,3-propanetricarboxylic acid tri(2-sec-butylcyclohexylamide);
   1,2,3-propanetricarboxylic acid tri(3-sec-butylcyclohexylamide);
   1,2,3-propanetricarboxylic acid tri(4-sec-butylcyclohexylamide);
   1,2,3-propanetricarboxylic acid tri(2-tert-butylcyclohexylamide);
   1,2,3-propanetricarboxylic acid tri(3-tert-butylcyclohexylamide) ;
   1,2,3-propanetricarboxylic acid tri(4-tert-butylcyclohexylamide) ;
<(AA2): butanetetracarboxylic acid tetraamides>
   1,2,3,4-butanetetracarboxylic acid tetra(cyclohexylamide);
   1,2,3,4-butanetetracarboxylic acid tetra(2-methylcyclohexylamide);
   1,2,3,4-butanetetracarboxylic acid tetra(3-methylcyclohexylamide);
   1,2,3,4-butanetetracarboxylic acid tetra(4-methylcyclohexylamide);
   1,2,3,4-butanetetracarboxylic acid tetra(2-ethylcyclohexylamide);
   1,2,3,4-butanetetracarboxylic acid tetra(3-ethylcyclohexylamide);
   1,2,3,4-butanetetracarboxylic acid tetra(4-ethylcyclohexylamide);
   1,2,3,4-butanetetracarboxylic acid tetra(2-n-propylcyclohexylamide);
   1,2,3,4-butanetetracarboxylic acid tetra(3-n-propylcyclohexylamide);
   1,2,3,4-butanetetracarboxylic acid tetra(4-n-propylcyclohexylamide);
   1,2,3,4-butanetetracarboxylic acid tetra(2-isopropylcyclohexylamide);
   1,2,3,4-butanetetracarboxylic acid tetra(3-isopropylcyclohexylamide);
   1,2,3,4-butanetetracarboxylic acid tetra(4-isopropylcyclohexylamide);
   1,2,3,4-butanetetracarboxylic acid tetra(2-n-butylcyclohexylamide);
   1,2,3,4-butanetetracarboxylic acid tetra(3-n-butylcyclohexylamide);
   1,2,3,4-butanetetracarboxylic acid tetra(4-n-butylcyclohexylamide);
   1,2,3,4-butanetetracarboxylic acid tetra(2-isobutylcyclohexylamide);
   1,2,3,4-butanetetracarboxylic acid tetra(3-iso-butylcyclohexylamide);
   1,2,3,4-butanetetracarboxylic acid tetra(4-isobutylcyclohexylamide);
   1,2,3,4-butanetetracarboxylic acid tetra(2-sec-butylcyclohexylamide);
   1,2,3,4-butanetetracarboxylic acid tetra(3-sec-butylcyclohexylamide) ;
   1,2,3,4-butanetetracarboxylic acid tetra(4-sec-butylcyclohexylamide);
   1,2,3,4-butanetetracarboxylic acid tetra(2-tert-butylcyclohexylamide);
   1,2,3,4-butanetetracarboxylic acid tetra(3-tert-butylcyclohexylamide);
   1,2,3,4-butanetetracarboxylic acid tetra(4-tert-butylcyclohexylamide) ;
<(AA3): benzenetricarboxylic acid triamides>
   1,3,5-benzenetricarboxylic acid tricyclohexylamide;
   1,3,5-benzenetricarboxylic acid tri(2-methylcyclohexylamide);
   1,3,5-benzenetricarboxylic acid tri(3-methylcyclohexylamide);
   1,3,5-benzenetricarboxylic acid tri(4-methylcyclohexylamide);
   1,3,5-benzenetricarboxylic acid tri(2-ethylcyclohexylamide);
   1,3,5-benzenetricarboxylic acid tri(3-ethylcyclohexylamide);
   1,3,5-benzenetricarboxylic acid tri(4-ethylcyclohexylamide);
   1,3,5-benzenetricarboxylic acid tri(2-n-propylcyclohexylamide);
   1,3,5-benzenetricarboxylic acid tri(3-n-propylcyclohexylamide);
   1,3,5-benzenetricarboxylic acid tri(4-n-propylcyclohexylamide);
   1,3,5-benzenetricarboxylic acid tri(2-isopropylcyclohexylamide);
   1,3,5-benzenetricarboxylic acid tri(3-isopropylcyclohexylamide);
   1,3,5-benzenetricarboxylic acid tri(4-isopropylcyclohexylamide);
   1,3,5-benzenetricarboxylic acid tri(2-n-butylcyclohexylamide);
   1,3,5-benzenetricarboxylic acid tri(3-n-butylcyclohexylamide);
   1,3,5-benzenetricarboxylic acid tri(4-n-butylcyclohexylamide);
   1,3,5-benzenetricarboxylic acid tri(2-isobutylcyclohexylamide);
   1,3,5-benzenetricarboxylic acid tri(3-isobutylcyclohexylamide);
   1,3,5-benzenetricarboxylic acid tri(4-isobutylcyclohexylamide);
   1,3,5-benzenetricarboxylic acid tri(2-sec-butylcyclohexylamide);
   1,3,5-benzenetricarboxylic acid tri(3-sec-butylcyclohexylamide);
   1,3,5-benzenetricarboxylic acid tri(4-sec-butylcyclohexylamide);
   1,3,5-benzenetricarboxylic acid tri(2-tert-butylcyclohexylamide);
   1,3,5-benzenetricarboxylic acid tri(3-tert-butylcyclohexylamide);
   1,3,5-benzenetricarboxylic acid tri(4-tert-butylcyclohexylamide), etc.

Of the aforementioned preferable amide-based compounds, those represented by the formula (1) wherein the three or four R² groups each represent hydrogen or methyl are preferable in view of easy availability of the starting materials and ability to provide a good balance between transparency and rigidity. Specific examples of such compounds include the following compounds:
1,2,3-propanetricarboxylic acid tricyclohexylamide;
1,2,3-propanetricarboxylic acid tri(2-methylcyclohexylamide);
1,2,3-propanetricarboxylic acid tri(3-methylcyclohexylamide);
1,2,3-propanetricarboxylic acid tri(4-methylcyclohexylamide);
1,2,3,4-butanetetracarboxylic acid tetracyclohexylamide;
1,2,3,4-butanetetracarboxylic acid tetra(2-methylcyclohexylamide);
1,2,3,4-butanetetracarboxylic acid tetra(3-methylcyclohexylamide);
1,2,3,4-butanetetracarboxylic acid tetra(4-methylcyclohexylamide);
1,3,5-benzenetricarboxylic acid tricyclohexylamide;
1,3,5-benzenetricarboxylic acid tri(2-methylcyclohexylamide);
1,3,5-benzenetricarboxylic acid tri(3-methylcyclohexylamide);
1,3,5-benzenetricarboxylic acid tri(4-methylcyclohexylamide);
1,2,3-propanetricarboxylic acid tri(di-2-methylcyclohexyl-monocyclohexyl) amide;
1,2,3-propanetricarboxylic acid tri(dicyclohexyl-2-methylcyclohexyl) amide, etc.

When the effect of improving the transparency is important, amide-based compounds of general formula (1) in which R¹ is a residue obtained by removing all of the carboxyl groups from 1,2,3-propanetricarboxylic acid or 1,3,5-benzenetricarboxylic acid are preferable. Specific examples are as follows:
1,2,3-propanetricarboxylic acid tricyclohexylamide;
1,2,3-propanetricarboxylic acid tri(2-methylcyclohexylamide);
1,2,3-propanetricarboxylic acid tri(3-methylcyclohexylamide);
1,2,3-propanetricarboxylic acid tri(4-methylcyclohexylamide);
1,3,5-benzenetricarboxylic acid tricyclohexylamide;
1,3,5-benzenetricarboxylic acid tri(2-methylcyclohexylamide), etc.

The aforementioned amide-based compounds may be used alone or at least two of them may be used in suitable combinations.

The crystal form of the amide-based compound of the invention is not limited so long as the effects of the invention can be attained; any crystal forms, such as hexagonal, monoclinic, cubic, etc., can be used. Such crystals are known or may be prepared by a known method.

The amide-based compound of the invention preferably has a purity of substantially 100%, but may also include small amounts of impurities. When containing impurities, the amide-based compound preferably has a purity of 90 wt% or more, more preferably 95 wt% or more, and particularly 97 wt% or more. Examples of impurities include monoamidedicarboxylic acids and esters thereof, diamidemonocarboxylic acids and esters thereof, which are derived from reaction intermediates or unreacted reactants; imide compounds derived from by-products; etc.

The method for producing the amide-based compound of the invention is not limited so long as the desired amide-based compound can be obtained. For example, the amide-based compounds may be produced from specific polycarboxylic acid component(s) and specific alicyclic monoamine component(s) according to a known method (see, for example, Japanese Unexamined Patent Publication No. 1995-242610). Examples of such aliphatic polycarboxylic acid components include 1,2,3-propanetricarboxylic acid, 1,2,3,4-butanetetracarboxylic acid, 1,3,5-benzenetricarboxylic acid, derivatives thereof such as acid chlorides and anhydrides thereof; esters of such polycarboxylic acids with C₁₋₄ lower alcohols, etc. One of such aliphatic polycarboxylic acid components or at least two of them may be subjected to amidation.

The alicyclic monoamine component(s) is at least one member selected from the group consisting of cyclohexylamine and C₁₋₁₀ (preferably C₁₋₄) linear or branched alkyl-substituted cyclohexylamines. One of such alicyclic monoamine components or at least two of them may be subjected to the amidation.

Specific examples are as follows: cyclohexylamine, 2-methylcyclohexylamine, 3-methylcyclohexylamine, 4-methylcyclohexylamine, 2-ethylcyclohexylamine, 3-ethylcyclohexylamine, 4-ethylcyclohexylamine, 2-n-propylcyclohexylamine, 2-isopropylcyclohexylamine, 2-n-butylcyclohexylamine, 2-isobutylcyclohexylamine, 2-sec-butylcyclohexylamine, 2-tert-butylcyclohexylamine, 2-n-hexylcyclohexylamine, 2-n-octylcyclohexylamine, 2-n-decylcyclohexylamine, 4-n-propylcyclohexylamine, 4-isopropylcyclohexylamine, 4-n-butylcyclohexylamine, 4-isobutylcyclohexylamine, 4-sec-butylcyclohexylamine, 4-tert-butylcyclohexylamine, 4-n-hexylcyclohexylamine, 4-n-octylcyclohexylamine, 4-n-decylcyclohexylamine, etc.

Preferable are cyclohexylamine, 2-methylcyclohexylamine, 3-methylcyclohexylamine, 4-methylcyclohexylamine, 2-ethylcyclohexylamine, 2-n-propylcyclohexylamine, 2-isopropylcyclohexylamine, 2-n-butylcyclohexylamine, 2-isobutylcyclohexylamine, 2-sec-butylcyclohexylamine, 2-tert-butylcyclohexylamine, etc.

The alkyl-substituted cyclohexylamine may be a cis isomer, trans isomer, or a mixture of these stereoisomers.
The ratio of cis isomer : trans isomer is preferably from 50 : 50 to 0 : 100, and more preferably from 35 : 65 to 0 : 100, in terms of GLC area %. Note "GLC" means gas-liquid chromatography.

The particle size of the amide-based compound of the invention is not limited so long as the effects of the invention can be attained; however, the particle size is preferably as small as possible from the standpoint of the dissolving rate (or dissolving time) at which the amide-based compound dissolves in a molten polyolefin-based resin. The maximum particle size of the amide-based compound is preferably 200 µm or less, more preferably 100 µm or less, still more preferably 50 µm or less, and particularly preferably 10 µm or less, as measured by a laser diffraction light scattering method (Volume Standard).

Examples of methods for controlling the maximum particle size within the above ranges include a method comprising pulverizing the amide-based compound using a pulverization apparatus known in the art, and a known classifier may be used as required. Examples of the pulverization apparatus include Fluidized Bed Counter Jet Mill 100 AFG (product name, manufactured by Hosokawa Micron Corporation), Supersonic Jet Mill PJM-100 (product name, manufactured by Nippon Pneumatic MFG., Co., Ltd.), pin mills, etc.; and examples of classifiers include sieve classifier, dry classifiers (cyclone, micron separators, etc.), and so forth.

### Component (B): Inorganic Compound

Component (B) of the invention is at least one inorganic compound selected from the group consisting of hydrotalcite, calcined hydrotalcite, talc, alkali aluminum double hydroxides, magnesium hydroxide, magnesium oxide, calcium carbonate, and calcium oxide.

The hydrotalcite for use in the invention may be a product that is generally commercially available, so long as the effects of the invention are not impaired. Examples of such hydrotalcites include Mg_{4.5}Al₂ (OH)₁₃CO₃·3.5H₂O (manufactured by Kyowa Chemical Industry Co., Ltd., product name "DHT-4A"); Mg_{4.5}Al₂(OH)₁₃CO₃ (manufactured by Kyowa Chemical Industry Co., Ltd., product name "DHT-4A2"); Mg_{4.5}Al₂ (OH)₁₃CO₃·3.5H₂O (manufactured by Kyowa Chemical Industry Co., Ltd., product name "DHT-6"); and the like. Some of the commercially available products are surface-treated as will be described blow, but represented by the same chemical formula expression as non-surface-treated products.

The calcined hydrotalcite is an inorganic oxide obtained by calcining the aforementioned hydrotalcite according to a known process (see JP-A-2006-511679, JP-A-2000-212272, JP-A-4-505449, etc.). The calcined hydrotalcite may be a product that is generally commercially available, so long as the effects of the invention are not impaired. For example, Mg_{0.7}Al_{0.3}O_{1.15} (manufactured by Kyowa Chemical Industry Co., Ltd., product name "KYOWAAD 2100") may be mentioned.

Talc is synonymous with the compound typically represented by Mg₃Si₄O₁₀ (OH)₂ or the compound referred to as hydrated magnesium silicate. The talc for use in the invention may be a product that is generally commercially available, so long as the effects of the invention are not impaired. For example, "Micro Ace P-6" (product name, manufactured by Nippon Talc Co., Ltd.) may be mentioned. Some kinds of talc may contain small amounts of impurities, such as carbonic acid and other minerals, depending on its origin, but may be used without restriction, so long as the effects of the invention are not impaired.

The alkali aluminum double hydroxide for use in the invention may be a synthesized product or a generally commercially available product, so long as the effects of the invention are not impaired. The term "alkali" denotes alkali metals and alkaline earth metals, and examples are lithium, sodium, potassium or other alkali metals, calcium, strontium, barium or other alkaline earth metals. Examples of commercially available products are Li₂Al₄ (OH)₁₂CO₃·3H₂O (manufactured by Mizusawa Industrial Chemicals, Ltd., product name, "Mizukalac L") may be mentioned. The alkali aluminum double hydroxide also includes alkali aluminum double hydroxide carbonates (see for example JP-A-10-45411), hydrocalumite, hydrocalumite carbonates (see for example JP-A-9-241019), etc.

The magnesium hydroxide, magnesium oxide, calcium carbonate and calcium oxide for use in the invention may each be a product or reagent that is generally commercially available, so long as the effects of the invention are not impaired. For example, commercially available magnesium hydroxide, "Magsarat F"(product name, manufactured by Kyowa Chemical Industry Co., Ltd.) may be mentioned.

The aforementioned inorganic compound may be surface treated (by, e.g., a treatment method such as coating) with stearic acid, oleic acid or other higher fatty acids, stearamide, oleamide or other higher fatty acid amides, etc.

The pH of the inorganic compound is preferably 7.0 to 14.0, more preferably 7.2 to 13.0, and still more preferably 7.5 to 12.0. The pH value is measured by the method that is described in Examples to be given later.

The particle size of the inorganic compound is not limited so long as the effects of the invention are not impaired; however, it is preferably as small as possible from the standpoint of dispersion in molten polyolefin-based resin and refractive index. The particle size of the inorganic compound is preferably such that the median diameter is 50 µm or less, more preferably 10 µm, and most preferably 1 µm, as measured by a laser diffraction light scattering method.

### Polyolefin-based resin

Examples of the polyolefin-based resin of the invention include polyethylene-based resins, polypropylene-based resins, polymethylpentene-based resins, polybutene-based resins, etc.

Specific examples include high-density polyethylenes, medium-density polyethylenes, linear polyethylenes, ethylene copolymers with an ethylene content of 50 wt% or more (preferably 70 wt% or more), propylene homopolymers, propylene copolymers with a propylene content of 50 wt% or more (preferably 70 wt% or more), butene homopolymers, butene copolymers with a butene content of 50 wt% or more (preferably 70 wt% or more), methylpentene homopolymers, methylpentene copolymers with a methylpentene content of 50 wt% or more (preferably 70 wt% or more), polybutadiene, etc.

Such copolymers may be random copolymers or block copolymers. When such resins have stereoregularity, they may be isotactic or syndiotactic.

Specific examples of comonomers which can form the copolymers as mentioned above include ethylene, propylene, butene, pentene, hexene, heptene, octene, nonene, decene, undecene, dodecene and like C₂₋₁₂ α-olefins ; 1,4-endomethylenecyclohexene and like bicyclo-type monomers; methyl (meth)acrylate, ethyl (meth) acrylate and like (meth) acrylic acid esters; vinyl acetate, etc.

Examples of catalysts used for producing such polymers include not only generally used Ziegler-Natta catalysts, but also catalyst systems comprising a combination of a transition metal compound (e.g., a titanium halide such as titanium trichloride or titanium tetrachloride) supported on a support comprising, as a main component, magnesium chloride or like magnesium halide, with an alkylaluminum compound (such as tetraethylaluminum or diethylaluminum chloride), and further include metallocene catalysts.

The melt flow rate (hereinafter referred to as "MFR"; measured according to JIS K 7210-1995) of the polyolefin-based resin used in the invention can be suitably selected according to the molding method to be employed, but it is recommended that the MFR is usually 0.01 to 200 g/10 minutes, and preferably 0.05 to 100 g/10 minutes.

### Polyolefin-based resin composition

The polyolefin-based resin composition of the invention is obtainable by adding component (A), component (B), and, if necessary, an additive or additives as will be mentioned below in the item of "Other Additives" (for example, polyolefin resin modifiers, etc.) to a polyolefin-based resin.

The polyolefin-based resin composition of the invention may be produced by, for example, the following methods.
(i): a method comprising providing a polyolefin-based resin (in powder, granule, flake, pellet, or other form), component (A), component (B), and if necessary, other additive(s), to give a desired composition ratio; and mixing (dry blending) the components using a conventional mixer (e.g., a Henschel mixer, ribbon blender, V blender, or the like) to yield a dry blended-type polyolefin-based resin composition.
(ii) : a method comprising melt-kneading the dry blended-type polyolefin-based resin composition at a temperature of, generally 160 to 300°C, preferably 180 to 280°C, and more preferably 200 to 260°C, using a conventional kneader such as a single screw or twin screw extruder; cooling the extruded strands; and subsequently cutting the strands to yield a pellet-type polyolefin-based resin composition.

The method for making pellet-type polyolefin-based resin compositions includes a method using a high-concentration master batch containing 1 to 20 wt% (preferably 2 to 15 wt%) of component (A). The high concentration master batch is diluted with an appropriate amount of a polyolefin-based resin to a desired composition ratio, and then the resulting composition is subjected to a molding processing.

In order to achieve the effects of the invention more effectively, the melt-kneading step described in the aforementioned item (ii) preferably comprises a step of dissolving component (A) completely in the melt of a polyolefin-based resin. This step is important, particularly when the polyolefin-based resin composition of the invention is intended for the uses in which the transparency of the resulting molded articles is important. In order to achieve complete dissolution, it is preferable to dissolve component (A) in a molten polyolefin-based resin by heating them at a temperature that is equal to or higher than the dissolution temperature of component (A) in the molten polyolefin-based resin.

The dissolution temperature can be determined, for example, as follows: First, a test polyolefin-based resin composition in the form of pellets is prepared. The test pellet thus prepared is then heated at a heating rate of 10°C /minute using a polarized light microscope equipped with a heating-stage. During the heating, the crystals of component (A) present in the pellet that is being heated is observed, and the temperature at which the crystals of component (A) have completely dissolved in the molten polyolefin-based resin is measured by visual observation.

In the present invention, provision of a process for preparing a polyolefin-based resin composition, such as the process described in item (ii) above, also means provision of the following invention.

That is, the present invention provides a method for improving the rigidity and transparency of a polyolefin-based resin, comprising adding to 100 weight parts of the polyolefin-based resin 0.01 to 1 weight part of component (A) and 0.005 to 1 weight part of component (B).

The present invention also provides a method for producing a polyolefin-based resin composition comprising 100 weight parts of the polyolefin-based resin, 0.01 to 1 weight part of component (A) and 0.005 to 1 weight part of component (B), the method comprising dissolving component (A) completely in a melt of the polyolefin-based resin.

The amount of component (A) according to the invention is 0.01 to 1 weight part, preferably 0.02 to 0.5 weight part, and more preferably 0.03 to 0.3 weight part, per 100 weight parts of a polyolefin-based resin.

The amount of component (B) according to the invention is 0.005 to 1 weight part, preferably 0.01 to 0.8 weight part, and particularly 0.02 to 0.5 weight part, per 100 weight parts of a polyolefin-based resin.

In the past, component (B), i.e., inorganic compound is used as filler in an amount as large as 5 to 30 weight parts per 100 weight parts of a polyolefin-based resin. It has been believed that fillers do not contribute to transparency. However, the present inventors have found a surprising effect that the use of a small amount of component (B) in combination with component (A) imparts even higher transparency. This effect was first discovered by the present inventors.

The ratio (by weight) of component (A) to component (B) is preferably 1: 0.01-10, more preferably 1: 0.05-5, more preferably 1 : 0.1-3, and particularly 1:0.1-2. The effects of the invention will become even more significant by the addition of components (A) and (B) in the above ratio to a polyolefin-based resin.

When a polypropylene random copolymer is used as the polyolefin-based resin of the invention, there is a tendency that particularly improved transparency and crystallinity are exhibited among the effects of the invention. When a polypropylene homopolymer is used, there is a tendency that excellent balance between transparency, crystallinity, heat resistance and rigidity is achieved. When a polypropylene block polymer is used, there is a tendency that particularly crystalinity, heat resistance and rigidity are improved among the effects of the invention.

Furthermore, the present invention provides a polyolefin-based resin nucleating agent composition. When producing the polyolefin-based resin composition, component (A) and component (B) may be mixed beforehand (preferably uniformly), and added as a nucleating agent composition for the polyolefin-based resin. Thus, the present invention provides a polyolefin-based resin nucleating agent composition comprising component (A) and component (B) as uniformly mixed.

The present invention also provides a polyolefin-based resin nucleating agent composition wherein component (A) and component (B) are present in such amounts that the weight ratio of component (A) to component (B) is preferably 1: 0.01-10, more preferably 1: 0.05-5, even more preferably 1: 0.1-3, and particularly 1: 0.1-2.

The nucleating agent composition of the present invention comprising component (A) and component (B) is in the form of a powder with good flowability, and is excellent in transferability through piping, and improves operation efficiency.

Examples of preferable methods for preparing the nucleating agent composition include dry blending, the method comprising using an organic solvent or like dispersion medium to mix the components uniformly, etc.

### Other Additives

The polyolefin-based resin composition of the invention may comprise, in addition to components (A) and (B), "other additive(s)" such as polyolefin modifiers and the like according to its use or application, to the extent that the effects of the invention are not impaired.

Examples of such polyolefin modifiers include various additives listed in "Tables of Positive Lists of Additives" edited by the Japan Hygienic Olefin and Styrene Plastics Association (January, 2002).

More specific examples include stabilizers (such as metal compounds, epoxy compounds, nitrogen compounds, phosphorus compounds, sulfur compounds, etc.), UV absorbers (such as benzophenone compounds and benzotriazole compounds), antioxidants (such as phenol compounds, phosphorous ester compounds, and sulfur compounds), surfactants, lubricants (such as paraffins, waxes, and other aliphatic hydrocarbons, C₈₋₂₂ higher fatty acids, salts of metals (Al, Ca, Mg, Zn) with a C₈₋₂₂ higher fatty acid, C₈₋₂₂ higher aliphatic alcohols, polyglycols, esters of C₄₋₂₂ higher fatty acids with C₄₋₁₈ aliphatic monohydric alcohols, C₈₋₂₂ higher fatty acid amides, silicone oils, rosin derivatives), foaming agents, foaming auxiliaries, polymer additives, plasticizers (such as dialkyl phthalates and dialkyl hexahydrophthalates, etc.), crosslinking agents, crosslinking accelerators, antistatic agents, dispersants, organic pigments, working auxiliaries, other nucleating agents, and like additives. The amount of additive(s) can be suitably selected so as not to impair the effects of the invention.

For example, the transparency of the polyolefin-based resin molded article of the invention (in particular, when the polyolefin-based resin is a polypropylene random copolymer) tends to be further improved by adding any of the aforementioned higher fatty acid metal salts to the polyolefin-based resin composition of the invention. C₈₋₂₂ higher fatty acid metal salts, preferably calcium stearate, may be mentioned as such an additive. Such additives are preferably used, per 100 weight parts of the polyolefin-based resin, in an amount of 0.001 to 0.2 weight part, and more preferably 0.005 to 0.1 weight part.

The polyolefin-based resin composition obtained as above is capable of yielding a useful polyolefin-based resin molded article exhibiting excellent crystallinity, heat resistance, rigidity and transparency.

### Polyolefin-based resin molded article

The polyolefin-based resin molded article of the invention is obtained by molding the polyolefin-based resin composition of the invention according to a known molding process conventionally used in this field. Specific examples of molding processes include injection molding, extrusion molding, blow molding, air-pressure forming, rotational molding, sheet molding, film molding, thermoforming, etc.

The molding conditions can be suitably selected from a wide range of conventionally used conditions. In order to achieve the effects of the invention more effectively, the process for molding the polyolefin-based resin composition of the invention preferably comprises molding the resin composition in which component (A) is completely dissolved in a melt of the polyolefin-based resin. This step is important, particularly when the polyolefin-based resin composition of the invention is intended for the uses in which the transparency of the resulting molded articles is important.

It is recommended that the molding temperature (resin temperature) is generally from 160 to 300°C, preferably from 180 to 280°C, and more preferably from 200 to 260°C.

The polyolefin-based resin molded article of the invention thus obtained is excellent in crystallinity, transparency, rigidity and heat resistance. Hence, it can be similarly used in the fields in which polyolefin-based resin compositions comprising a nucleating agent such as metal phosphates, metal carboxylates, or benzylidene sorbitols have been used.

Specific examples include disposable syringes, packaging materials for foods, plants, etc.; various cases such as cases for clothing, containers for storing clothing, etc.; cups for heat-packaging foods, packaging containers for retort-processed foods; containers for use in microwave ovens, cans, bottles, etc., for beverages, such as juice, tea, etc., for cosmetics, medicines, shampoos, etc.; containers and caps for seasonings such as miso, soy sauce, etc.; cases and containers for food stuff such as water, rice, bread, pickles, etc.; sundries such as cases for use in refrigerators, etc.; stationeries; electrical and mechanical parts; automobile parts, etc.

In addition to the effects of the invention, the polyolefin-based resin molded article of the invention has an advantage that, because amide-based compounds of component (A) themselves have excellent thermal stabilities, the article is substantially free from odor or taste transfer from the amide-based compound(s). Therefore, the molded article of the invention is especially useful for uses in which the prevention of odor or taste transfer is important (e.g., food packages, beverage bottles, cases for cosmetics, etc.).

### EXAMPLES

The present invention is described in detail with reference to the following examples and comparative examples, which are not intended to limit the invention.

The pH values and particle size of inorganic compounds used in accordance with the invention were measured in the manner described below in items (1) and (2), respectively. Polyolefin-based resin molded articles were evaluated for their crystallinity, rigidity, heat resistance and transparency in the manner described below in items (3) to (6), respectively.

### (1) pH value

In a 100 ml conical flask was placed 50 ml of a 50 v/v% aqueous solution of ethanol, and then 1 g of an inorganic compound was added thereto. The mixture was stirred with a magnetic stirrer in a thermostat bath at 25°C to disperse the inorganic compound. The pH value of the stirred dispersion was measured using a pH meter (manufactured by Horiba, Ltd.) exactly 10 minutes after the addition of the inorganic compound.

### (2) Particle size (Volume standard)

An inorganic compound was uniformly dispersed in water using a surfactant to prepare a dispersion of the inorganic compound. The median diameter (µm) of the particles of the dispersion was measured using a laser diffraction/scattering-type particle size distribution analyzer (product name "LA-910", manufactured by Horiba, Ltd.). The lower the value, the smaller the particle size.

### (3) Crystallinity

The exothermic peak was determined in accordance with JIS-K-7121 using a differential scanning calorimeter (product name "Diamond DSC", manufactured by Perkin Elmer, Inc.). The peak temperature of the exothermic peak was defined as the crystallization temperature (°C). The higher the crystallization temperature, the higher the crystallinity.

The crystallization rate increases with increasing crystallization temperature, and therefore high crystallization rate contributes to shortened molding cycle time in injection molding.

### (4) Rigidity

Flexural modulus (MPa) was measured in accordance with JIS-K-7203 (1982) using an Instron universal tester (product name "Instron", manufactured by Instron Japan Company Ltd.). Testing was conducted at a temperature of 25°C and at a speed of 10 mm/min. The higher the flexural modulus, the higher the rigidity.

Note that in the Examples and Comparative Examples, the test pieces for measuring the flexural modulus had a length of 90 mm, a width of 10 mm and a height of 4 mm.

### (5) Heat resistance

Deflection temperature (°C) under load was measured in accordance with ASTM D648 using an HDT testing apparatus (product name "HDT TESTER 3M-2", manufactured by Toyo Seiki Seisakusho, Ltd.). Testing was conducted at a flexural stress of 0.45 MPa using the edgewise method. The higher the deflection temperature under load, the superior the heat resistance.

Note that in the Examples and comparative Examples, the test pieces for measuring the deflection temperature under load had a length of 110 mm, a width of 13 mm and a height of 40 mm.

### (6) Transparency

The haze value (%, 1-mm thickness) was measured in accordance with ASTM D1003 using a haze meter (product name "Haze-gard II", manufactured by Toyo Seiki Seisakusho, Ltd.). The lower the value, the higher the transparency.

### Preparation Example 1

To a 500 ml four-necked flask equipped with a stirrer, a thermometer, a condenser and a gas inlet were placed 9.7 g (0.055 mol) of 1,2,3-propanetricarboxylic acid and 100 g of N-methyl-2-pyrrolidone. The mixture was stirred at room temperature in a nitrogen atmosphere until the 1,2,3-propanetricarboxylic acid was completely dissolved.

Next, 20.5 g (0.1815 mol) of 2-methylcyclohexylamine (trans isomer : cis isomer = 74.3 : 25.7; GLC area %), 56.3 g (0.1815 mol) of triphenyl phosphite, 14.4 g (0.1815 mol) of pyridine, and 50 g of N-methyl-2-pyrrolidone were added, and the mixture was subjected to a reaction with stirring at 100°C for 4 hours in a nitrogen atmosphere. After cooling, the reaction solution was slowly poured into a mixture of 500 ml of isopropyl alcohol and 500 ml of water, and the resulting mixture was stirred at about 40°C for 1 hour. The white precipitate thus formed was then filtered off. The obtained white solid was washed twice with 500 ml of isopropyl alcohol at about 40°C, and then dried at 100°C and 133 Pa for 6 hours.

The dried product was pulverized in a mortar, and passed through a standard sieve having openings of 106 µm (in accordance with JIS-Z-8801 standard) to afford 18.8 g of 1,2,3-propanetricarboxylic acid tri(2-methylcyclohexylamide) (hereinafter abbreviated to "PTC-2MeCHA") in accordance with the invention (yield: 74%).

### Preparation Example 2

The procedure of Preparation Example 1 was repeated, except that cyclohexylamine (0.1815 mol) was used instead of 2-methylcyclohexylamine (0.1815 mol), thus yielding 20.3 g of 1,2,3-propanetricarboxylic acid tricyclohexylamide (hereinafter abbreviated to "PTC-CHA") in accordance with the invention (yield: 80%).

### Preparation Example 3

The procedure of Preparation Example 1 was repeated, except that 2-methylcyclohexylamine (trans isomer : cis isomer = 100 : 0; GLC area %, 0.1815 mol) was used instead of 2-methylcyclohexylamine (trans isomer : cis isomer = 74.3 : 25.7; GLC area %, 0.1815 mol), thus yielding 17.3 g of 1,2,3-propanetricarboxylic acid tri(2-methylcyclohexylamide) (trans isomer; hereinafter abbreviated to "PTC-2MeCHA(100)") in accordance with the invention (yield: 75%).

### Preparation Example 4

The procedure of Preparation Example 1 was repeated, except that 1,3,5-benzenetricarboxylic acid (0.055 mol) and cyclohexylamine (0.1815 mol) were used instead of 1,2,3-propanetricarboxylic acid (0.055 mol) and 2-methylcyclohexylamine (0.1815 mol), thus yielding 19.4 g of 1,3,5-benzenetricarboxylic acid tricyclohexylamide (hereinafter abbreviated to "TM-CHA") in accordance with the invention (yield: 78%).

### Preparation Example 5

The procedure of Preparation Example 1 was repeated, except that 1,2,3,4-butanetetracarboxylic acid (0.055 mol), 2-methylcyclohexylamine (0.242 mol), triphenyl phosphite (0.242 mol) and pyridine (0.242 mol) were used instead of 1,2,3-propanetricarboxylic acid (0.055 mol), 2-methylcyclohexylamine (0.1815 mol), triphenyl phosphite (0.1815 mol) and pyridine (0.1815 mol), thus yielding 21.3 g of 1,2,3,4-butanetetracarboxylic acid tetra(2-methylcyclohexylamide) (hereinafter abbreviated to "BTC-2MeCHA") in accordance with the invention (yield: 63%).

### Preparation Example 6

The procedure of Preparation Example 1 was repeated, except that 1,2,3,4-butanetetracarboxylic acid (0.055 mol), cyclohexylamine (0.242 mol), triphenyl phosphite (0.242 mol) and pyridine (0.242 mol) were used instead of 1,2,3-propanetricarboxylic acid (0.055 mol), 2-methylcyclohexylamine (0.1815 mol), triphenyl phosphite (0.1815 mol) and pyridine (0.1815 mol), thus yielding 20.0 g of 1,2,3,4-butanetetracarboxylic acid tetracyclohexylamide (hereinafter abbreviated to "BTC-CHA") in accordance with the invention (yield: 66%).

### Example 1

To 100 weight parts of isotactic homopolypropylene resin (MFR = 30 g/10 min; hereafter abbreviated to "h-PP") were added 0.15 weight part of component (A), i.e., PTC-2MeCHA prepared in Preparation Example 1, 0.05 weight part of component (B), Hydrotalcite 1 (i.e., Mg_{4.5}Al₂(OH)₁₃CO₃·3.5H₂O, product name "DHT-4A", manufactured by Kyowa Chemical Industry Co., Ltd.), and other additives, i.e., 0.05 weight part of tetrakis[methylene-3-(3,5-di-t-butyl-4-hydroxyphenyl)propionate]methane (product name "IRGANOX 1010", manufactured by Ciba Specialty Chemicals Inc.) and 0.05 weight part of tetrakis(2,4-di-t-buthylphenyl)phosphite (product name "IRGAFOS 168", manufactured by Ciba Specialty Chemicals Inc.). The mixture was dry blended in a Henschel mixer at 1000 rpm for 5 minutes to give a dry-blended type polyolefin-based resin composition in accordance with the invention.

The dry-blended type polyolefin-based resin composition was then melt-kneaded with a 20-mm diameter single-screw extruder at a resin temperature of 240°C. The extruded strands were cooled with water, and then cut to yield a pellet-type polyolefin-based resin composition in accordance with the invention.

It was confirmed in advance that said amount of component (A) dissolves in the molten polypropylene resin at 240°C. In the following Examples, it was also confirmed, as in Example 1, using a polarized light microscope equipped with a heating-stage by visual observation that each amount of compound (A) as listed in the following Tables dissolves in the molten polypropylene resin.

The pellets thus obtained were subsequently injection molded at a resin temperature of 250°C and a mold temperature of 40°C to yield a polyolefin-based resin molded article (test piece) in accordance with the invention. The crystallization temperature, flexural modulus, deflection temperature under load and haze value of the test piece, along with the pH value and particle size of the inorganic compound used were measured. The results are presented in Table 1.

### Examples 2 to 13

The procedure of Example 1 was repeated, except that the type or the amount of component (A) or component (B) were changed to those listed in Table 1, thus giving polyolefin-based resin molded articles (test pieces) in accordance with the invention.

The crystallization temperature, flexural modulus, deflection temperature under load and haze value of each test piece, along with the pH value and particle size of the inorganic compound used were measured. The results are presented in Tables 1 and 2.

### Comparative Examples 1 to 10

The procedure of Example 1 was repeated, except that the type or the amount of component (A) and component (B) were changed to those listed in Table 3, thus obtaining a polyolefin-based resin molded article (test piece) not in accordance with the invention. The crystallization temperature, flexural modulus, deflection temperature under load, and haze value of the test piece, along with the pH value and particle size of the inorganic compound used were measured. The results are presented in Table 3. Note that activated clay is listed in Table 3 as in the column labeled "component (B)"; however, it is different from component (B).

**Table 1**

| | Polyolefin -based resin | Component (A): amide-based compound | | Component (B): inorganic compound | | | | Polyolefin-based resin molded article | | | |
|---|---|---|---|---|---|---|---|---|---|---|---|
| | Type | Type | Amount | Type | Amount | pH | Particle size | Crystallization temp. | Flexural modulus | Deflection temperature under load | Haze value |
| | | | (wt parts) | | (wt parts) | | (µm) | (°C) | (MPa) | (°C) | (%) |
| Ex.1 | h-PP | PTC-2MeCHA | 0.15 | Hydrotalcite 1 Mg_{4.5}Al₂(OH)₁₃CO₃·3.5H₂O | 0.05 | 8.6 | 0.43 | 132 | 1960 | 123 | 17 |
| Ex. 2 | h-PP | PTC-2MeCHA | 0.15 | Hydrotalcite 2 Mg_{4.5}Al₂(OH)₁₃CO₃ | 0.05 | 9.3 | 0.44 | 131 | 1950 | 123 | 15 |
| Ex.3 | h-PP | PTC-2MeCHA | 0.15 | Lithium aluminum double hydroxide Li₂Al₄(OH)₁₂CO₃·3H₂O | 0.05 | 9.8 | 0.52 | 131 | 1940 | 122 | 17 |
| Ex.4 | h-PP | PTC-2MeCHA | 0.15 | Hydrotalcite 3 Mg_{4.5}Al₂(OH)₁₃CO₃·3.5H₂O | 0.05 | 8.5 | 0.56 | 131 | 1950 | 122 | 15 |
| Ex.5 | h-PP | PTC-2MeCHA | 0.15 | Calcined hydrotalcite Mg_{0.7}Al_{0.3}O_{1.15} | 0.05 | 11.4 | 8.6 | 131 | 1950 | 122 | 20 |
| Ex.6 | h-PP | PTC-2MeCHA | 0.15 | Talc Mg₃Si₄O₁₀(OH)₂ | 0.05 | 9.0 | 5.5 | 127 | 1940 | 121 | 23 |
| Ex.7 | h-PP | PTC-2MeCHA | 0.15 | Mg(OH)₂ | 0.05 | 9.7 | 6.9 | 131 | 1960 | 121 | 16 |

**Table 2**

| | Polyolefin -based resin | Component (A): amide-based compound | | Component (B): inorganic compound | | | | Polyolefin-based resin molded article | | | |
|---|---|---|---|---|---|---|---|---|---|---|---|
| | Type | Type | Amount | Type | Amount | pH | Particle size | Crystallization temp. | Flexural modulus | Deflection temperature under load | Haze value |
| | | | (wt parts) | | (wt parts) | | (µm) | (°C) | (MPa) | (°C) | (%) |
| Ex.8 | h-PP | PTC-2MeCHA | 0.05 | Hydrotalcite 1 Mg_{4.5}Al₂(OH)₁₃CO₃·3.5H₂O | 0.1 | 8.6 | 0.43 | 130 | 1710 | 121 | 39 |
| Ex.9 | h-PP | PTC-CHA | 0.15 | Hydrotalcite 1 Mg_{4.5}Al₂(OH)₁₃CO₃·3.5H₂O | 0.05 | 8.6 | 0.43 | 130 | 1900 | 121 | 29 |
| Ex.10 | h-PP | PTC-2MeCHA (100) | 0.05 | Hydrotalcite 1 Mg_{4.5}Al₂(OH)₁₃CO₃·3.5H₂O | 0.05 | 8.6 | 0.43 | 129 | 1810 | 120 | 33 |
| Ex.11 | h-PP | TM-CHA | 0.05 | Hydrotalcite 1 Mg_{4.5}Al₂(OH)₁₃CO₃·3.5H₂O | 0.05 | 8.6 | 0.43 | 126 | 1880 | 119 | 43 |
| Ex.12 | h-PP | BTC-2MeCHA | 0.02 | Hydrotalcite 1 Mg_{4.5}Al₂(OH)₁₃CO₃·3.5H₂O | 0.05 | 8.6 | 0.43 | 127 | 1850 | 119 | 38 |
| Ex.13 | h-PP | BTC-CHA | 0.02 | Hydrotalcite 1 Mg_{4.5}Al₂(OH)₁₃CO₃·3.5H₂O | 0.05 | 8.6 | 0.43 | 128 | 1860 | 120 | 41 |

**Table 3**

| | Polyolefin-based resin | Component (A): amide-based compound | | Component (B): inorganic compound | | | | Polyolefin-based resin molded article | | | |
|---|---|---|---|---|---|---|---|---|---|---|---|
| | Type | Type | Amount | Type | Amount | pH | Particle size | Crystallization temp. | Flexural modulus | Deflection temperature under load | Haze value |
| | | | (wt parts) | | (wt parts) | | (µm) | (°C) | (MPa) | (°C) | (%) |
| Comp. Ex. 1 | h-PP | PTC-2MeCHA | 0.15 | - | - | - | - | 125 | 1910 | 118 | 24 |
| Comp. Ex.2 | h-PP | - | - | Hydrotalcite 1 Mg_{4.5}Al₂(OH)₁₃CO₃·3.5H₂O | 0.05 | 8.6 | 0.43 | 114 | 1260 | 98 | 74 |
| Comp. Ex. 3 | h-PP | PTC-2MeCHA | 0.15 | Activated clay | 0.05 | 5.6 | 31.4 | 122 | 1900 | 119 | 25 |
| Comp. Ex. 4 | h-PP | PTC-2MeCHA | 0.05 | - | - | - | - | 124 | 1650 | 119 | 48 |
| Comp. Ex. 5 | h-PP | PTC-CHA | 0.15 | - | - | - | - | 124 | 1860 | 119 | 40 |
| Comp. Ex. 6 | h-PP | - | - | - | - | - | - | 114 | 1240 | 97 | 67 |
| Comp. Ex. 7 | h-PP | PTC-2MeCHA(100) | 0.05 | - | - | - | - | 125 | 1750 | 118 | 46 |
| Comp. Ex. 8 | h-PP | TM-CHA | 0.05 | - | - | - | - | 123 | 1850 | 116 | 50 |
| Comp. Ex. 9 | h-PP | BTC-2MeCHA | 0.02 | - | - | - | - | 123 | 1790 | 114 | 46 |
| Comp. Ex.10 | h-PP | BTC-CHA | 0.02 | - | - | - | - | 125 | 1810 | 115 | 47 |

In Tables 1 to 3 above, and also in Tables 4 and 5 below,
"Hydrotalcite 1" is Mg_{4.5}Al₂(OH)₁₃CO₃·3.5H₂O, product name "DHT-4A", manufactured by Kyowa Chemical Industry Co., Ltd;
"Hydrotalcite 2" is Mg_{4.5}Al₂(OH)₁₃CO₃, product name "DHT-4A2", manufactured by Kyowa Chemical Industry Co., Ltd;
"Lithium aluminium double hydroxide" is Li₂Al₄(OH)₁₂CO₃·3H₂O, product name "Mizukalac L", manufactured by Mizusawa Industrial Chemicals, Ltd;
"Hydrotalcite 3" is Mg_{4.5}Al₂(OH)₁₃CO₃·3.5H₂O, product name "DHT-6", manufactured by Kyowa Chemical Industry Co., Ltd.;
"Calcined hydrotalcite" is Mg_{0.7}Al_{0.3}O_{1.15}, product name "KYOWAAD 2100", manufactured by Kyowa Chemical Industry Co., Ltd. ;
"Talc" is Mg₃Si₄O₁₀(OH)₂, product name, "Micro Ace P-6", manufactured by Nippon Talc Co., Ltd; and
"Mg(OH)₂" is product name " Magsarat F", manufactured by Kyowa Chemical Industry Co., Ltd.

### Example 14

The procedure of Example 1 was repeated, except that h-PP was changed to a polypropylene block copolymer having an ethylene content of 9.5 wt.% (MFR = 18 g/10 min, hereinafter abbreviated to "b-PP"), thus producing a polyolefin-based resin molded article (test piece) in accordance with the invention. The crystallization temperature, flexural modulus and deflection temperature under load of the test piece, along with the pH value and particle size of the inorganic compound used were measured. The results are shown in Table 4.

### Example 15

The procedure of Example 14 was repeated, except that the type of component (B) was changed as listed in Table 4, thus producing a polyolefin-based resin molded article (test piece) in accordance with the invention. The crystallization temperature, flexural modulus and deflection temperature under load of the test piece, along with the pH value and particle size of the inorganic compound used were measured. The results are presented in Table 4.

### Comparative Examples 11 to 13

The procedure of Example 14 was repeated, except that the type or the amount of component (A) or component (B) were changed to those listed in Table 4, thus producing a polyolefin-based resin molded article (test piece) not in accordance with the invention. The crystallization temperature, flexural modulus and deflection temperature under load of the test piece were measured. The results are presented in Table 4.

**Table 4**

| | Polyolefin-based resin | Component (A): amide-based compound | | Component (B): inorganic compound | | | | Polyolefin-based resin molded article | | |
|---|---|---|---|---|---|---|---|---|---|---|
| | Type | Type | Amount | Type | Amount | pH | Particle size | Crystallization temperature | Flexural modulus | Deflection temperature under load |
| | | | (wt parts) | | (wt part) | | (µm) | (°C) | (MPa) | (°C) |
| Ex. 14 | b-PP | PTC-2MeCHA | 0.15 | Hydrotalcite 1 Mg_{4.5}Al₂(OH)₁₃CO₃· 3.5H₂O | 0.05 | 8.6 | 0.43 | 129 | 1280 | 104 |
| Ex. 15 | b-PP | PTC-2MeCHA | 0.15 | Talc Mg₃Si₄O₁₀(OH)₂ | 0.05 | 9.0 | 5.5 | 127 | 1260 | 103 |
| Comp. Ex. 11 | b-PP | PTC-2MeCHA | 0.15 | - | - | - | - | 124 | 1220 | 101 |
| Comp. Ex. 12 | b-PP | - | - | Hydrotalcite 1 Mg_{4.5}Al₂(OH)₁₃CO₃· 3.5H₂O | 0.05 | 8.6 | 0.43 | 112 | 1030 | 85 |
| Comp. Ex. 13 | b-PP | - | - | - | - | - | - | 112 | 1020 | 84 |

### Example 16

The procedure of Example 1 was repeated, except that h-PP was changed to a polypropylene random copolymer having an ethylene content of 3.0 wt.% (MFR = 20 g/10 min, hereinafter abbreviated to "r-PP"), thus yielding a polyolefin-based resin molded article (test piece) in accordance with the invention. The crystallization temperature, flexural modulus, deflection temperature under load and haze value of the test piece, along with the pH value and particle size of the inorganic compound used, were measured. The results are presented in Table 5.

### Comparative Examples 14 to 16

The procedure of Example 16 was repeated, except that the type or the amount of component (A) or component (B) was changed as shown in Table 5, thus giving a polyolefin-based resin molded article (test piece) not in accordance with the invention. The crystallization temperature, flexural modulus, deflection temperature under load, and haze value of the test piece, along with the pH value and particle size of the inorganic compound used, were measured. The results are presented in Table 5.

**Table 5**

| | Polyolefin-based resin | Component (A): amide-based compound | | Component (B): Inorganic compound | | | | Polyolefin-based resin molded article | | | |
|---|---|---|---|---|---|---|---|---|---|---|---|
| | Type | Type | Amount | Type | Amount | pH | Particle size | Crystallization temperature | Flexural modulus | Deflection temperature under load | Haze value |
| | | | (wt part) | | (wt parts) | | (µm) | (°C) | (MPa) | (°C) | (%) |
| Ex. 16 | r-PP | PTC-2MeCHA | 0.15 | Hydrotalcite 1 Mg_{4.5}Al₂(OH)₁₃CO₃· 3.5H₂O | 0.05 | 8.6 | 0.43 | 123 | 1340 | 101 | 9 |
| Comp. Ex. 14 | r-PP | PTC-2MeCHA | 0.15 | - | - | - | - | 116 | 1310 | 99 | 12 |
| Comp. Ex. 15 | r-PP | - | - | Hydrotalcite 1 Mg_{4.5}Al₂(OH)₁₃CO₃· 3.5H₂O | 0.05 | 8.6 | 0.43 | 109 | 1040 | 87 | 59 |
| Comp. Ex. 16 | r-PP | - | - | - | - | - | - | 109 | 1030 | 87 | 58 |

### INDUSTRIAL AVAILABILITY

A polyolefin-based resin composition in accordance with the invention is suitable for use in known molding processes such as injection molding, film-molding, blow molding, extrusion molding, thermoforming, etc. A resin-molded article obtained by molding such a polyolefin-based resin composition exhibits excellent crystallinity, rigidity, heat resistance and transparency, and therefore used as a material for medical instruments, packaging materials for foods, plants, etc., cases for a variety of uses, packaging containers for foods, containers for use in microwave ovens, sundries, stationeries, electrical and mechanical parts, automobile parts, etc.

## Claims

1. A polyolefin-based resin composition comprising:
a polyolefin-based resin, and per 100 weight parts of the polyolefin-based resin,
(A): 0.01 to 1 weight part of at least one amide-based compound represented by general formula (1): 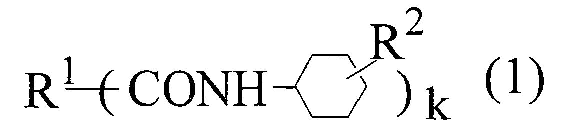 wherein
k is an integer of 3 or 4;
R¹ is a residue obtained by removing all of the carboxyl groups from 1,2,3-propanetricarboxylic acid, 1,2,3,4-butanetetracarboxylic acid or 1,3,5-benzenetricarboxylic acid; and
the three or four R²s are the same or different, and each independently represents a hydrogen atom or a C₁₋₁₀ linear or branched alkyl group; and
(B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.

2. A polyolefin-based resin composition according to claim 1, wherein component (A) and component (B) are used in a weight ratio of component (A): component (B)=1 : 0.01-10.

3. A polyolefin-based resin composition according to claim 1, wherein component (A) and component (B) are used in a weight ratio of component (A) : component (B)= 1 : 0.1 - 3.

4. A polyolefin-based resin molded article obtainable by molding a polyolefin-based resin composition according to any one of claims 1 to 3.

5. A method for improving the transparency of a polyolefin-based resin, comprising adding to 100 weight parts of the polyolefin-based resin:
(A): 0.01 to 1 weight part of at least one amide-based compound represented by general formula (1): 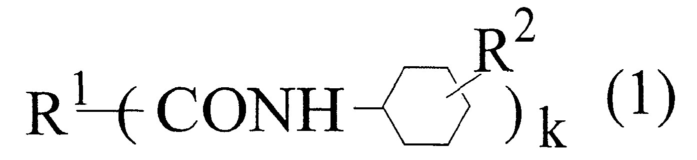 wherein
k is an integer of 3 or 4,
R¹ is a residue obtained by removing all of the carboxyl groups from 1,2,3-propanetricarboxylic acid, 1,2,3,4-butanetetracarboxylic acid or 1,3,5-benzenetricarboxylic acid; and
the three or four R²s are the same or different, and each independently represents a hydrogen atom or a C₁₋₁₀ linear or branched alkyl group; and
(B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.

6. A method for improving the rigidity of a polyolefin-based resin, comprising adding to 100 weight parts of the polyolefin-based resin:
(A): 0.01 to 1 weight part of at least one amide-based compound represented by general formula (1): 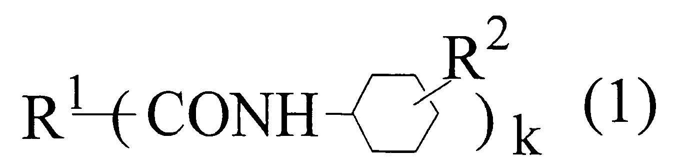 wherein
k is an integer of 3 or 4,
R¹ is a residue obtained by removing all of the carboxyl groups from 1,2,3-propanetricarboxylic acid, 1,2,3,4-butanetetracarboxylic acid or 1,3,5-benzenetricarboxylic acid; and
the three or four R²s are the same or different, and each independently represents a hydrogen atom or a C₁₋₁₀ linear or branched alkyl group, and
(B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate and calcium oxide.

7. A method for producing a polyolefin-based resin composition comprising
a polyolefin-based resin, and per 100 weight parts of the polyolefin-based resin,
(A): 0.01 to 1 weight part of at least one amide-based compound represented by general formula (1): 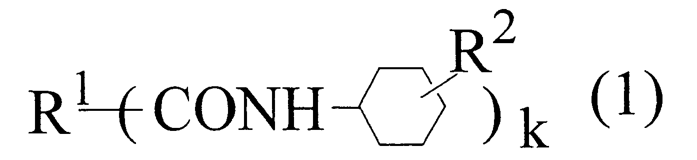 wherein
k is an integer of 3 or 4
R¹ is a residue obtained by removing all of the carboxyl groups from 1,2,3-propanetricarboxylic acid, 1,2,3,4-butanetetracarboxylic acid or 1,3,5-benzenetricarboxylic acid;
and
the three or four R²s are the same or different, and each independently represents a hydrogen atom or a C₁₋₁₀ linear or branched alkyl group, and
(B): 0.005 to 1 weight part of at least one inorganic compound selected from the group consisting of hydrotalcite, calcined hydrotalcite, talc, alkali aluminum double hydroxides, magnesium hydroxide, magnesium oxide, calcium carbonate, and calcium oxide,
the method comprising dissolving component (A) completely in a melt of the polyolefin-based resin.

8. A nucleating agent composition for polyolefin-based resins, comprising:
(A): at least one amide-based compound represented by general formula (1): 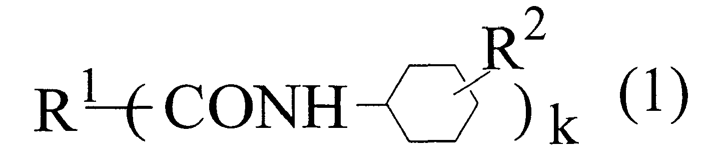 wherein
k is an integer of 3 or 4,
R¹ is a residue obtained by removing all of the carboxyl groups from 1,2,3-propanetricarboxylic acid, 1,2,3,4-butanetetracarboxylic acid or 1,3,5-benzenetricarboxylic acid; and
the three or four R²s are the same or different, and each independently represents a hydrogen atom or a C₁₋₁₀ linear or branched alkyl group, and
(B): at least one inorganic compound selected from the group consisting of hydrotalcite, calcined hydrotalcite, talc, alkali aluminum double hydroxides, magnesium hydroxide, magnesium oxide, calcium carbonate and calcium oxide.

## Patentansprüche

1. Eine Harzzusammensetzung auf der Basis von Polyolefin, umfassend:
ein Harz auf der Basis von Polyolefin und, bezogen auf 100 Gewichtsteile des Harzes auf der Basis von Polyolefin,
(A): 0,01 bis 1 Gewichtsteil von mindestens einer Verbindung auf der Basis von Amid, dargestellt durch die allgemeine Formel (1): 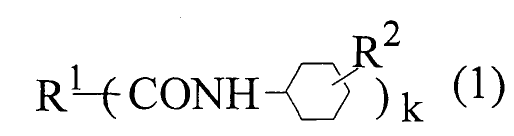 wobei
k eine ganze Zahl von 3 oder 4 ist;
R¹ ein Rest ist, erhalten durch Entfernen aller Carboxylgruppen von 1,2,3-Propantricarbonsäure, 1,2,3,4-Butantetracarbonsäure oder 1,3,5-Benzoltricarbonsäure;
und
die drei oder vier Reste R² gleich oder verschieden sind und jeder unabhängig für ein Wasserstoffatom oder einen linearen oder verzweigten C₁₋₁₀-Alkylrest steht; und
(B): 0,005 bis 1 Gewichtsteil von mindestens einer anorganischen Verbindung, ausgewählt aus der Gruppe bestehend aus Hydrotalcit, calciniertem Hydrotalcit, Talk, Alkalialuminiumdoppelhydroxiden, Magnesiumhydroxid, Magnesiumoxid, Calciumcarbonat und Calciumoxid.

2. Eine Harzzusammensetzung auf der Basis von Polyolefin gemäß Anspruch 1, wobei Komponente (A) und Komponente (B) in einem Gewichtsverhältnis von Komponente (A) : Komponente (B) = 1 : 0,01-10 verwendet werden.

3. Eine Harzzusammensetzung auf der Basis von Polyolefin gemäß Anspruch 1, wobei Komponente (A) und Komponente (B) in einem Gewichtsverhältnis von Komponente (A) : Komponente (B) = 1 : 0,1-3 verwendet werden.

4. Ein Formgegenstand aus Harz auf der Basis von Polyolefin, erhältlich durch Formen einer Harzzusammensetzung auf der Basis von Polyolefin gemäß einem der Ansprüche 1 bis 3.

5. Ein Verfahren zur Verbesserung der Transparenz eines Harzes auf der Basis von Polyolefin, umfassend Hinzufügen zu 100 Gewichtsteilen des Harzes auf der Basis von Polyolefin:
(A): 0,01 bis 1 Gewichtsteil von mindestens einer Verbindung auf der Basis von Amid, dargestellt durch die allgemeine Formel (1): 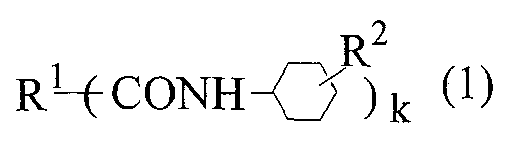 wobei
k eine ganze Zahl von 3 oder 4 ist,
R¹ ein Rest ist, erhalten durch Entfernen aller Carboxylgruppen von 1,2,3-Propantricarbonsäure, 1,2,3,4-Butantetracarbonsäure oder 1,3,5-Benzoltricarbonsäure; und
die drei oder vier Reste R² gleich oder verschieden sind und jeder unabhängig für ein Wasserstoffatom oder einen linearen oder verzweigten C₁₋₁₀-Alkylrest steht; und
(B): 0,005 bis 1 Gewichtsteil von mindestens einer anorganischen Verbindung, ausgewählt aus der Gruppe bestehend aus Hydrotalcit, calciniertem Hydrotalcit, Talk, Alkalialuminiumdoppelhydroxiden, Magnesiumhydroxid, Magnesiumoxid, Calciumcarbonat und Calciumoxid.

6. Ein Verfahren zur Verbesserung der Steifigkeit eines Harzes auf der Basis von Polyolefin, umfassend Hinzufügen zu 100 Gewichtsteilen des Harzes auf der Basis von Polyolefin:
(A): 0,01 bis 1 Gewichtsteil von mindestens einer Verbindung auf der Basis von Amid, dargestellt durch die allgemeine Formel (1): 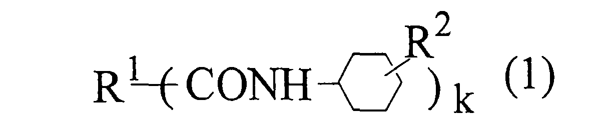 wobei
k eine ganze Zahl von 3 oder 4 ist,
R¹ ein Rest ist, erhalten durch Entfernen aller Carboxylgruppen von 1,2,3-Propantricarbonsäure, 1,2,3,4-Butantetracarbonsäure oder 1,3,5-Benzoltricarbonsäure;
und
die drei oder vier Reste R² gleich oder verschieden sind und jeder unabhängig für ein Wasserstoffatom oder einen linearen oder verzweigten C₁₋₁₀-Alkylrest steht, und
(B): 0,005 bis 1 Gewichtsteil von mindestens einer anorganischen Verbindung, ausgewählt aus der Gruppe bestehend aus Hydrotalcit, calciniertem Hydrotalcit, Talk, Alkalialuminiumdoppelhydroxiden, Magnesiumhydroxid, Magnesiumoxid, Calciumcarbonat und Calciumoxid.

7. Ein Verfahren zur Herstellung einer Harzzusammensetzung auf der Basis von Polyolefin, umfassend
ein Harz auf der Basis von Polyolefin und, bezogen auf 100 Gewichtsteile des Harzes auf der Basis von Polyolefin,
(A): 0,01 bis 1 Gewichtsteil von mindestens einer Verbindung auf der Basis von Amid, dargestellt durch die allgemeine Formel (1): 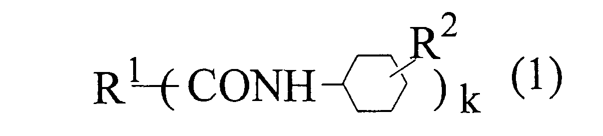 wobei
k eine ganze Zahl von 3 oder 4 ist,
R¹ ein Rest ist, erhalten durch Entfernen aller Carboxylgruppen von 1,2,3-Propantricarbonsäure, 1,2,3,4-Butantetracarbonsäure oder 1,3,5-Benzoltricarbonsäure;
und
die drei oder vier Reste R² gleich oder verschieden sind und jeder unabhängig für ein Wasserstoffatom oder einen linearen oder verzweigten C₁₋₁₀-Alkylrest steht, und
(B): 0,005 bis 1 Gewichtsteil von mindestens einer anorganischen Verbindung, ausgewählt aus der Gruppe bestehend aus Hydrotalcit, calciniertem Hydrotalcit, Talk, Alkalialuminiumdoppelhydroxiden, Magnesiumhydroxid, Magnesiumoxid, Calciumcarbonat und Calciumoxid,
wobei das Verfahren das vollständige Lösen der Komponente (A) in einer Schmelze des Harzes auf der Basis von Polyolefin umfasst.

8. Eine Keimbildner-Zusammensetzung für Harze auf der Basis von Polyolefin, umfassend:
(A): mindestens eine Verbindung auf der Basis von Amid, dargestellt durch die allgemeine Formel (1): 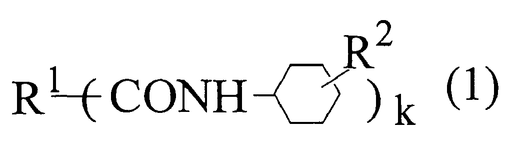 wobei
k eine ganze Zahl von 3 oder 4 ist,
R¹ ein Rest ist, erhalten durch Entfernen aller Carboxylgruppen von 1,2,3-Propantricarbonsäure, 1,2,3,4-Butantetracarbonsäure oder 1,3,5-Benzoltricarbonsäure; und
die drei oder vier Reste R² gleich oder verschieden sind und jeder unabhängig für ein Wasserstoffatom oder einen linearen oder verzweigten C₁₋₁₀-Alkylrest steht, und
(B): mindestens eine anorganische Verbindung, ausgewählt aus der Gruppe bestehend aus Hydrotalcit, calciniertem Hydrotalcit, Talk, Alkalialuminiumdoppelhydroxiden, Magnesiumhydroxid, Magnesiumoxid, Calciumcarbonat und Calciumoxid.

## Revendications

1. Composition de résine à base de polyoléfines comprenant :
une résine à base de polyoléfines, et pour 100 parties en poids de la résine à base de polyoléfines,
(A) : de 0,01 à 1 partie en poids d'au moins un composé à base d'amides représenté par la formule générale (1) : 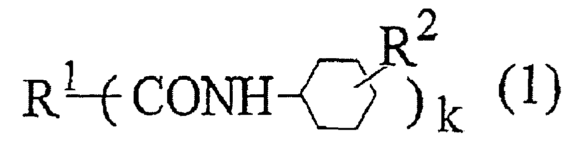 dans laquelle :
k représente un nombre entier de 3 ou 4 ;
R¹ représente un résidu obtenu en éliminant tous les groupes carboxyliques de l'acide 1,2,3-propane-tricarboxylique, de l'acide 1,2,3,4-butane-tétracarboxylique ou de l'acide 1,3,5-benzene-tricarboxylique ; et
les trois ou quatre R² sont identiques ou différents, et représentent chacun indépendamment un atome d'hydrogène ou un groupe alkyle linéaire ou ramifié en C₁ à C₁₀ ; et
(B) : de 0,005 à 1 partie en poids d'au moins un composé inorganique choisi dans le groupe comprenant de l'hydrotalcite, de l'hydrotalcite calcinée, du talc, des hydroxydes doubles d'aluminium alcalin, de l'hydroxyde de magnésium, de l'oxyde de magnésium, du carbonate de calcium et de l'oxyde de calcium.

2. Composition de résine à base de polyoléfines selon la revendication 1, dans laquelle le composant (A) et le composant (B) sont utilisés dans un rapport en poids du composant (A) : composant (B) = 1 : 0,01 - 10.

3. Composition de résine à base de polyoléfines selon la revendication 1, dans laquelle le composant (A) et le composant (B) sont utilisés dans un rapport en poids du composant (A) : composant (B) = 1 : 0,1 - 3.

4. Article moulé en résine à base de polyoléfines pouvant être obtenu en moulant une composition de résine à base de polyoléfines selon l'une quelconque des revendications 1 à 3.

5. Procédé destiné à améliorer la transparence d'une résine à base de polyoléfines, comprenant l'étape consistant à ajouter aux 100 parties en poids de la résine à base de polyoléfines :
(A) : de 0,01 à 1 partie en poids d'au moins un composé à base d'amides représenté par la formule générale (1) : 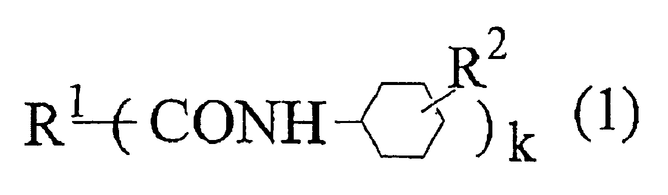 dans laquelle :
k représente un nombre entier de 3 ou 4 ;
R¹ représente un résidu obtenu en éliminant tous les groupes carboxyliques de l'acide 1,2,3-propane-tricarboxylique, de l'acide 1,2,3,4-butane-tétracarboxylique ou de l'acide 1,3,5-benzene-tricarboxylique ; et
les trois ou quatre R² sont identiques ou différents, et représentent chacun indépendamment un atome d'hydrogène ou un groupe alkyle linéaire ou ramifié en C₁ à C₁₀ ; et
(B) : de 0,005 à 1 partie en poids d'au moins un composé inorganique choisi dans le groupe comprenant de l'hydrotalcite, de l'hydrotalcite calcinée, du talc, des hydroxydes doubles d'aluminium alcalin, de l'hydroxyde de magnésium, de l'oxyde de magnésium, du carbonate de calcium et de l'oxyde de calcium.

6. Procédé destiné à améliorer la rigidité d'une résine à base de polyoléfines, comprenant l'étape consistant à ajouter aux 100 parties en poids de la résine à base de polyoléfines :
(A) : de 0,01 à 1 partie en poids d'au moins un composé à base d'amides représenté par la formule générale (1) : 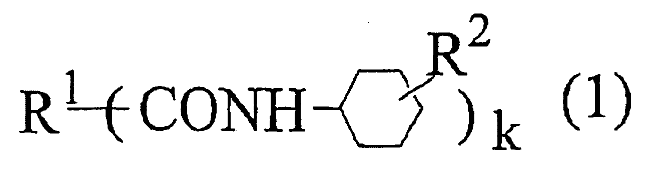 dans laquelle :
k représente un nombre entier de 3 ou 4 ;
R¹ représente un résidu obtenu en éliminant tous les groupes carboxyliques de l'acide 1,2,3-propane-tricarboxylique, de l'acide 1,2,3,4-butane-tétracarboxylique ou de l'acide 1,3,5-benzene-tricarboxylique ; et
les trois ou quatre R² sont identiques ou différents, et représentent chacun indépendamment un atome d'hydrogène ou un groupe alkyle linéaire ou ramifié en C₁ à C₁₀ ; et
(B) : de 0,005 à 1 partie en poids d'au moins un composé inorganique choisi dans le groupe comprenant de l'hydrotalcite, de l'hydrotalcite calcinée, du talc, des hydroxydes doubles d'aluminium alcalin, de l'hydroxyde de magnésium, de l'oxyde de magnésium, du carbonate de calcium et de l'oxyde de calcium.

7. Procédé de production d'une composition de résine à base de polyoléfines comprenant :
une résine à base de polyoléfines, et pour 100 parties en poids de la résine à base de polyoléfines,
(A) : de 0,01 à 1 partie en poids d'au moins un composé à base d'amides représenté par la formule générale (1) : 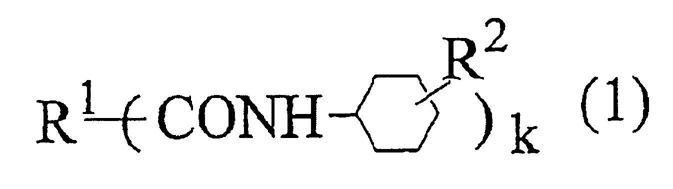
dans laquelle :
k représente un nombre entier de 3 ou 4 ;
R¹ représente un résidu obtenu en éliminant tous les groupes carboxyliques de l'acide 1,2,3-propane-tricarboxylique, de l'acide 1,2,3,4-butane-tétracarboxylique ou de l'acide 1,3,5-benzene-tricarboxylique ; et
les trois ou quatre R² sont identiques ou différents, et représentent chacun indépendamment un atome d'hydrogène ou un groupe alkyle linéaire ou ramifié en C₁ à C₁₀ ; et
(B) : de 0,005 à 1 partie en poids d'au moins un composé inorganique choisi dans le groupe comprenant de l'hydrotalcite, de l'hydrotalcite calcinée, du talc, des hydroxydes doubles d'aluminium alcalin, de l'hydroxyde de magnésium, de l'oxyde de magnésium, du carbonate de calcium, et de l'oxyde de calcium,
le procédé comprenant l'étape consistant à dissoudre complètement le composant (A) dans un bain de résine à base de polyoléfines.

8. Composition d'un agent de nucléation destiné à des résines à base de polyoléfines, comprenant :
(A) : au moins un composé à base d'amides représenté par la formule générale (1) : 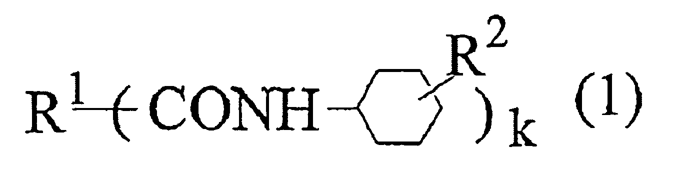 dans laquelle :
k représente un nombre entier de 3 ou 4 ;
R¹ représente un résidu obtenu en éliminant tous les groupes carboxyliques de l'acide 1,2,3-propane-tricarboxylique, de l'acide 1,2,3,4-butane-tétracarboxylique ou de l'acide 1,3,5-benzene-tricarboxylique ; et
les trois ou quatre R² sont identiques ou différents, et représentent chacun indépendamment un atome d'hydrogène ou un groupe alkyle linéaire ou ramifié en C₁ à C₁₀ ; et
(B) : au moins un composé inorganique choisi dans le groupe comprenant de l'hydrotalcite, de l'hydrotalcite calcinée, du talc, des hydroxydes doubles d'aluminium alcalin, de l'hydroxyde de magnésium, de l'oxyde de magnésium, du carbonate de calcium et de l'oxyde de calcium.
